# EUROPÄISCHE PATENTSCHRIFT

(11) **EP 2 912 320 B1**
(45) Veröffentlichungstag und Bekanntmachung des Hinweises auf die Patenterteilung: **09.06.2021**
(21) Anmeldenummer: 13762066.2
(22) Anmeldetag: 07.09.2013
(51) Int. Cl.: F15B 1/24, F15B 15/14, F16J 1/00

(54) **TRENNVORRICHTUNG FÜR FLUIDMEDIEN**
SEPARATING DEVICE FOR FLUID MEDIA
DISPOSITIF DE SÉPARATION POUR MILIEUX FLUIDES

(30) Priorität: 26.10.2012 DE 102012021841
(43) Veröffentlichungstag der Anmeldung: 02.09.2015
(73) Patentinhaber: Hydac Technology GmbH, 66280 Sulzbach/Saar (DE)
(72) Erfinder: KLOFT, Peter, 56235 Ransbach-Baumbach (DE); BALTES, Herbert, 66679 Losheim (DE)
(74) Vertreter: Bartels und Partner, Patentanwälte
(86) Internationale Anmeldenummer: PCT/EP2013/002692
(87) Internationale Veröffentlichungsnummer: WO 2014/063766

(56) Entgegenhaltungen:
- WO-A1-2005/068848
- DE-A1- 1 625 985
- DE-A1-102004 033 502
- DE-B- 1 026 143
- GB-A- 759 106
- US-A- 2 734 531
- US-A- 2 742 929
- US-A- 3 158 180
- US-A- 4 819 698

## Beschreibung

Die Erfindung betrifft eine Trennvorrichtung für Fluidmedien mit den Merkmalen im Oberbegriff von Anspruch 1. Ferner bezieht sich die Erfindung auf eine Kolben-Zylinder-Anordnung, die eine Trennvorrichtung dieser Art aufweist.

Trennvorrichtungen der oben angegebenen Gattung kommen auf mannigfachen Einsatzgebieten und in Verbindung mit den verschiedenartigsten Medien und bei Arbeitsgehäusen unterschiedlichster Bauarten zum Einsatz. Je nach Anwendungsgebiet können in den betreffenden Medienräumen flüssige, gasförmige oder bedingt strömungsfähige Medien, wie pastöse Substanzen, eingeschlossen sein. Dementsprechend kann der jeweilige Trennkolben die Aufgabe haben, gasförmige Medien von flüssigen Medien, gasförmige Medien von gasförmigen Medien, flüssige Medien von flüssigen Medien oder eine der vorstehend genannten Medienarten von pastösen Medien oder letztere untereinander zu trennen. Als weitere wesentliche Einsatzgebiete für Trennvorrichtungen der eingangs genannten Gattung sind Kolben-Zylinder-Anordnungen wie Pumpeinrichtungen, Arbeitszylinder oder Kolbenspeicher zu nennen. Wenn für Pumpeinrichtungen oder Arbeitszylinder der Trennkolben als Pumpenkolben oder Arbeitskolben dient, ist er mit einer kraftübertragenden Einrichtung gekoppelt, beispielsweise in Form einer Kolbenstange. Bei einem Kolbenspeicher ist der Trennkolben als Freikolben im betreffenden Speichergehäuse verfahrbar und trennt in diesem beispielsweise eine Gasseite von einer Ölseite.
In Anbetracht der vielseitigen Anwendungsmöglichkeiten derartige Trennvorrichtungen, von denen vorstehend beispielhaft lediglich ein Teil angesprochen ist, ergeben sich bei der Herstellung solcher Trennvorrichtungen hohe Stückzahlen. Aus wirtschaftlichen Gründen besteht daher die Forderung nach rationeller und kostengünstiger Fertigung der Trennvorrichtungen.
Die DE 1 625 985 beschreibt eine Trennvorrichtung für Fluidmedien, die in einem Arbeitsgehäuse aufnehmbar sind, mit einem Trennkolben, der innerhalb des Arbeitsgehäuses zwei Medienräume voneinander mediendicht separieren kann und der entlang seines Außenumfangs zumindest teilweise mit einer Führungseinrichtung versehen ist, die bei einer Verfahrbewegung des Trennkolbens innerhalb des Arbeitsgehäuses an dessen Innenwandung gleitend anliegen kann, wobei die Führungseinrichtung einstückiger Bestandteil des Trennkolbens ist, wobei die Führungseinrichtung einen Führungsring aufweist, und wobei der Trennkolben einen die Trennwand zwischen den Räumen des Arbeitsgehäuses bildenden Boden aufweist, der eine ein Teil einer Kugelfläche bildende Wölbung ins Kolbeninnere aufweist. Der gewölbte Teil geht dabei in einen geneigten Wandteil über. Weitere Trennvorrichtungen gehen aus der DE 1 026 143, der US 2 742 929, der DE 10 2004 033 502 A1, der WO 2005/068848 A1, der US 3 158 180, der US 2 734 531, der US 4 819 698 und der GB 759 106 hervor. Im Hinblick auf diese Problematik liegt der Erfindung die Aufgabe zugrunde, eine Trennvorrichtung zur Verfügung zu stellen, die einfach und kostengünstig herstellbar ist, sich nichts desto weniger jedoch durch ein günstiges und sicheres Betriebsverhalten auszeichnet.

Erfindungsgemäß ist diese Aufgabe durch eine Trennvorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass Verstärkungsrippen in Form von in gleichen Abständen voneinander angeordneten, sich in Radialrichtung erstreckenden Platten die Verbindung zwischen dem Führungsring des Trennkolbens und dessen Boden bilden und dass an einer den Verstärkungsrippen gegenüberliegenden Innenseite der Wölbung diese durch aus einer Innenwand vorstehende Rippen verstärkt ist.

Es ist ferner vorgesehen, dass die Führungseinrichtung einstückiger Bestandteil des Trennkolbens ist. Dadurch, dass dergestalt der Kolben selbst mit eigener Materialpartie die Führungsfunktion für die Verfahrbewegungen innerhalb des Arbeitsgehäuses übernimmt, kommen die im Stand der Technik vorgesehenen Einrichtungen in Wegfall, wie übliche Führungsbänder oder Führungsleisten, die in entlang des Außenumfangs betreffender Trennkolben ausgebildeten nutartigen Ausnehmungen aufnehmbar sind. Die Erfindung führt nicht nur zu verringerten Materialkosten, sondern vermeidet auch für die Anbringung der Führungsbänder und -leisten anfallende Montagekosten, so dass insbesondere geringere Fertigungskosten realisierbar sind.

Für eine besonders einfache und rationelle Fertigung ist vorgesehen, dass die Führungseinrichtung einen Führungsring aufweist, der am Trennkolben unmittelbar angeformt ist.

Bei besonders vorteilhaften Ausführungsbeispielen ist der Führungsring an einem Endbereich des Trennkolbens angeformt.

Bei einer solchen Ausführungsform ergeben sich besonders günstige Führungs- und Abdichtungseigenschaften des Trennkolbens, wenn an dem dem Führungsring entgegengesetzten Endbereich des Trennkolbens eine umfängliche Ringnut als Sitz für eine Kolbendichtung, beispielsweise in Form eines O-Ringes, gebildet ist. Durch den so gebildeten axialen Abstand zwischen Führungsring und Kolbendichtung ist der Trennkolben besonders kippsicher und mit guter Abdichtung an der Innenwandung des Arbeitsgehäuses geführt.

Für die Zusammenwirkung mit einer kreiszylindrischen Innenwandung des Arbeitsgehäuses kann der Führungsring eine einen Teil eines Zylindermantels bildende Führungsfläche ausbilden, so dass über einen Axialbereich des Kolbens eine Gleitfläche gebildet ist.

Der Trennkolben weist einen die Trennwand zwischen den Räumen des Arbeitsgehäuses bildenden Boden auf, der eine ein Teil einer Kugelfläche bildende Wölbung ins Kolbeninnere aufweist. Eine gewölbte Struktur trägt nicht nur zur Erhöhung der Festigkeit bei, sondern bietet auch die Möglichkeit einer Volumenvergrößerung des an den Boden des Trennkolbens angrenzenden Medienraums.

In besonders vorteilhafter Weise kann diesbezüglich die Anordnung so getroffen sein, dass der Boden des Trennkolbens ein halbkugelartiges, zu einer Kolbenseite offenes Gewölbe bildet, an dessen Innenseite die Rippen vorgesehen sind, die, bezogen auf die durch die Öffnung der Halbkugelform definierte Äquatorialebene, entlang von Längenkreisen verlaufen. Die halbkugelartige Form eines Gewölbes mit verstärkenden inneren Rippen ergibt sowohl eine hohe Strukturfestigkeit des Bodens als auch eine verhältnismäßig starke Vergrößerung des Volumens des an den Boden angrenzenden Raumes.

Bei Ausführungsbeispielen, bei denen sich das Gewölbe des Bodens mit einer im Bereich der Kugelmitte gebildeten Außenfläche bis zur Höhe des benachbarten Endbereichs des Trennkolbens erstreckt, ergibt sich der besondere Vorteil, dass die steife Gewölbestruktur des Bodens als Anlagefläche dienen kann, mit der sich der Trennkolben bei einer Verfahrbewegung bis zu einem Enddeckel eines betreffenden Arbeitsgehäuses am Enddeckel abstützen kann.

Der Trennkolben ist derart ausgebildet, dass Verstärkungsrippen in Form von in gleichen Abständen voneinander angeordneten, sich sternförmig in Radialrichtung erstreckenden Platten die Verbindung zwischen dem Führungsring des Trennkolbens und dessen Boden bilden. Dadurch ergibt sich eine Hohlräume aufweisende, offene Bauweise des Trennkolbens, bei der eine hohe Festigkeit bei geringem Werkstoffeinsatz erreicht ist. Neben dem Vorteil des geringen Werkstoffeinsatzes ergibt sich der Vorteil des geringen Kolbengewichts mit entsprechend geringer Massenträgheit des Kolbens bei den Verfahrensbewegungen. Dies ist nicht nur bei einem Einsatz des Trennkolbens bei Kolben/Zylinderanordnungen in Form von Arbeitszylindern, Pumpenzylindern oder dergleichen vorteilhaft, sondern insbesondere auch bei einem Einsatz des Trennkolbens als Freikolben bei Kolbenspeichern, bei denen ein leichtgewichtiger Kolben ein gutes Ansprechverhalten ermöglicht.

Bei einer Bauweise mit Verstärkungsrippen als Verbindungselemente zwischen Führungsring und Boden des Trennkolbens kann im Interesse weiterer Gewichts- und Werkstoffeinsparung auf ein geschlossenes, zwischen Führungsring und Boden verlaufendes Kolbenhemd verzichtet werden. Auch können die radial außenliegenden Endränder der Verstärkungsrippen in dem zwischen dem Führungsring und der Ringnut gelegenen Axialbereich des Trennkolbens radial nach innen versetzt verlaufen, wodurch sich eine weitere Verringerung von Gewicht und Materialeinsatz ergibt. Dabei kann der Endrand mit einer Biegung radial nach innen verlaufen.

Bei besonders vorteilhaften Ausführungsbeispielen sind die Verstärkungsrippen derart ausgebildet, dass ihr oberer Rand mit der oberen Außenfläche des Kugelgewölbes des Bodens und mit dem das Kolbenende definierenden Endrand des Führungsringes in einer gemeinsamen Ebene liegt. Dadurch ergibt sich eine wesentliche Vergrößerung der Kontaktfläche, mit der der Trennkolben an einem Deckel eines betreffenden Arbeitsgehäuses in Anlage kommen kann, beispielsweise einem Zylinderdeckel bei einem Kolbenspeicher.

Die Bauweise mit einem durch ein halbkugelartiges Gewölbe verstärkten Bodenbereich und mit verstärkenden Rippen ermöglicht die Herstellung eines Trennkolbens hoher Struktur- und Formfestigkeit mit geringstem Materialaufwand und eröffnet insbesondere auch die Möglichkeit, den Trennkolben aus einem Kunststoffwerkstoff durch Spritzformen besonders rationell und wirtschaftlich herzustellen.

Gemäß dem Patentanspruch 11 ist Gegenstand der Erfindung auch eine Kolben-Zylinder-Anordnung, die eine Trennvorrichtung gemäß einem der Ansprüche 1 bis 10 aufweist.

Eine derartige Kolben-Zylinder-Anordnung kann unter anderem mit Vorteil auch als Kolbenspeicher ausgebildet sein, in dem der Trennkolben eine Gasseite von einer Ölseite separiert.

Nachstehend ist die Erfindung anhand von in der Zeichnung dargestellten Ausführungsbeispielen im Einzelnen erläutert. Es zeigen:
- Fig. 1: einen Längsschnitt eines schematisch vereinfacht dargestellten Kolbenspeichers, versehen mit einem Trennkolben gemäß einem Ausführungsbeispiel der erfindungsgemäßen Trennvorrichtung;
- Fig. 2: eine gegenüber einer praktischen Ausführungsform vergrößert gezeichnete Draufsicht des Trennkolbens von Fig. 1;
- Fig. 3: eine weiter vergrößert und in perspektivischer Schrägansicht gezeichnete Schnittdarstellung des Trennkolbens von Fig. 1 und 2;
- Fig. 4: eine der Fig. 3 ähnliche Darstellung eines zweiten Ausführungsbeispiels des Trennkolbens; und
- Fig. 5 bis 9: entsprechende Darstellungen dritter bis siebter Ausführungsbeispiele des Trennkolbens.

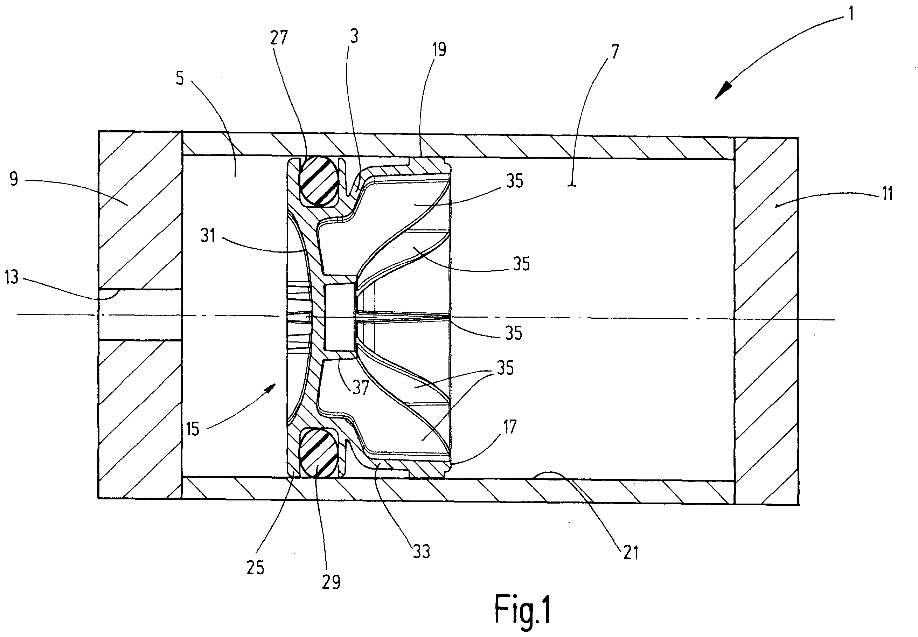

In der folgenden Beschreibung ist die erfindungsgemäße Trennvorrichtung anhand eines Anwendungsbeispiels erläutert, bei dem in einem als Ganzes mit 1 bezeichneten Speichergehäuse ein axial verfahrbarer Trennkolben 3 eine Ölseite 5 von einer Gasseite 7 trennt. Das kreiszylindrische Gehäuse 1 ist endseitig von zwei Deckelteilen 9, 11 abgeschlossen, von denen das in Fig. 1 linksseitig gelegene Deckelteil 9 einen Ölanschluss 13 aufweist, der es erlaubt, den Kolbenspeicher fluidführend an die nicht näher dargestellte Verrohrung eines Hydrauliksystems anzuschließen und mit der Ölseite 5 zu verbinden. Das in Fig. 1 rechtsseitig gelegene Deckelteil 11 kann ein nicht dargestelltes Füllventil aufweisen, über das die Gasseite 7 mit einem Arbeitsgas, beispielsweise Stickstoffgas, befüllbar ist. Der insoweit erwähnte Aufbau eines Kolbenspeichers ist Stand der Technik, so dass an dieser Stelle hierauf nicht mehr näher einzugehen ist.

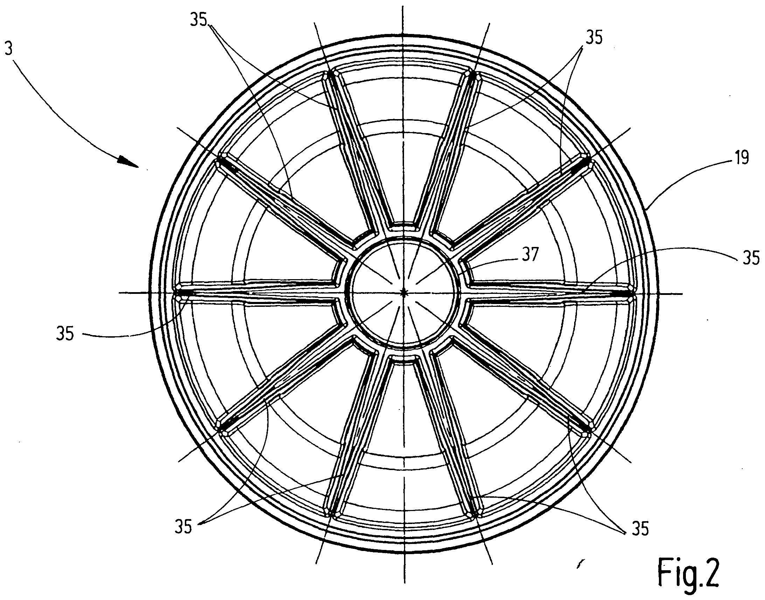

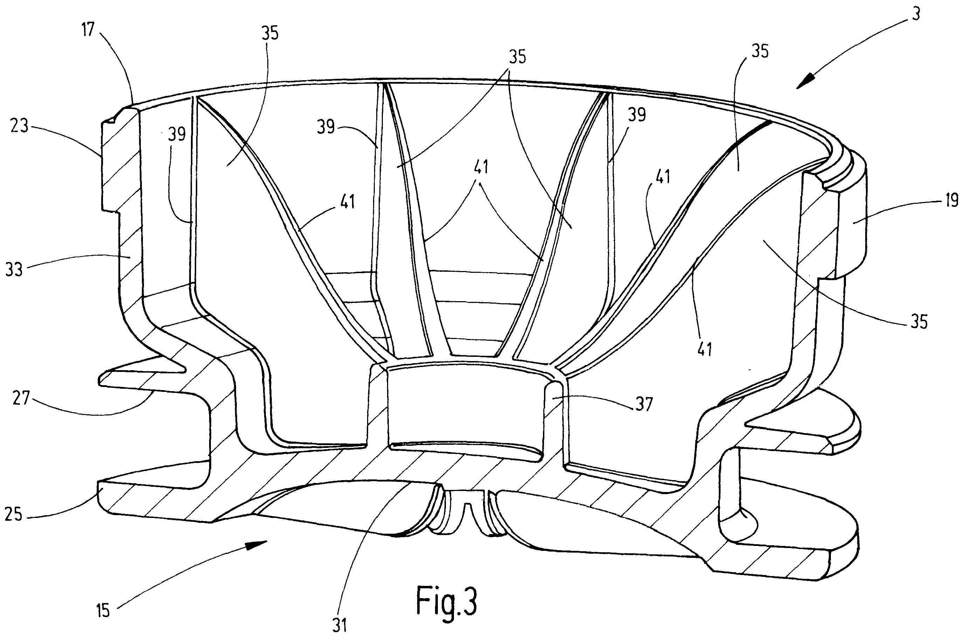

Wie die Fig. 1 und insbesondere die Fig. 2 und 3, in denen der Trennkolben 3 einzeln dargestellt ist, zeigen, ist der Trennkolben 3 in einer Art Leichtbauweise ausgebildet, wobei sich zwischen einem Boden 15, der die Trennwand zwischen Ölseite 5 und Gasseite 7 bildet, und einem dem Boden 15 entgegengesetzten Endbereich 17 mehrere Hohlräume befinden. Im Bereich dieses Endbereichs 17 ist am Trennkolben 3 außenumfangsseitig ein Führungsring 19 als einstückiger Bestandteil des Trennkolbens 3 an diesen unmittelbar angeformt. Der als Kolbenführung vorgesehene Führungsring 19 bildet außenseitig für die Zusammenwirkung mit der kreiszylindrischen Innenwandung 21 des Gehäuses 1 eine Führungsfläche 23 in Form eines Teils eines Zylindermantels, der sich vom Endbereich 17 über einen Teil der axialen Länge des Trennkolbens 3 erstreckt, etwa über 1/5 der axialen Länge des Trennkolbens 3. Am gegenüberliegenden Boden 15 schließt sich an dessen Außenrand 25 eine Ringnut 27 als Sitz für ein als Kolbendichtung vorgesehenes Dichtelement an, wie einen lediglich in Fig. 1 dargestellten O-Ring 29. In seinem Zentralbereich weist der Boden 15 eine Wölbung 31 in Richtung auf das Kolbeninnere auf, die Teil einer Kugelfläche bildet. Bei dem Ausführungsbeispiel von Fig. 1 bis 3 weist der Trennkolben 3 eine Kolbenwand 33 auf, die sich vom Führungsring 19, zu dessen Führungsfläche 23 radial nach innen versetzt, axial bis zur Ringnut 27 erstreckt. Verstärkungsrippen 35 in Form flacher Platten, die sich sternartig in Radialrichtung erstrecken, bilden die Verbindung zwischen dem Führungsring 19, der Kolbenwand 33 und dem Boden 15, wobei, wie am deutlichsten aus Fig. 3 entnehmbar ist, die radial innenliegenden Endränder der Verstärkungsrippen 35 an einem zylindrischen Aufnahmering 37 im Zentralbereich der Wölbung 31 des Bodens 15 zusammenlaufen. Mit ihren äußeren Endrändern 39 grenzen die Verstärkungsrippen 35 an die Innenseite des Führungsringes 19 und die Kolbenwand 33 an. Wie am deutlichsten der Fig. 3 entnehmbar ist, verlaufen die sich radial erstreckenden Endränder 41 der Verstärkungsrippen 35 in geschwungenem Verlauf zu dem in Axialrichtung tiefer gelegenen Aufnahmering 37 hin.

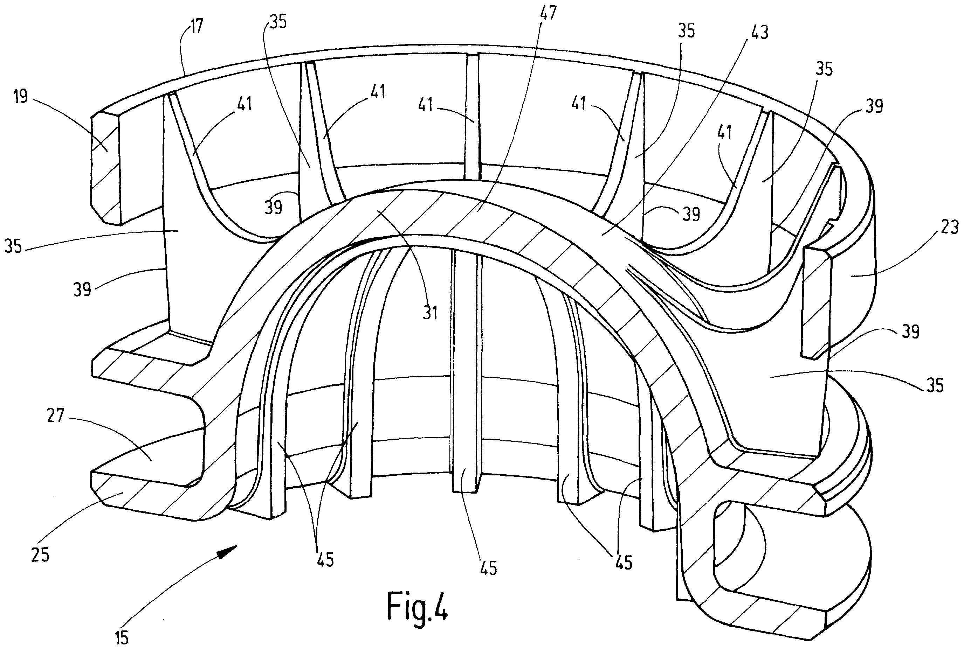

Das in Fig. 4 dargestellte zweite Ausführungsbeispiel unterscheidet sich vom zuvor beschriebenen Beispiel unter anderem durch einen wesentlich stärker gewölbten Boden 15. Ausgehend von dem Bereich des Außenrandes 25 mit der daran befindlichen Ringnut 27 für das in Fig. 4 nicht gezeigte Dichtelement, ist die zentrale Wölbung 31 derart ausgebildet, dass im Inneren des Trennkolbens 3 ein halbkugelförmiges Gewölbe 43 entsteht, an dessen Innen- und Außenseite sich Hohlräume befinden. An der Innenseite ist das Gewölbe 43 durch aus der Innenwand vorstehende Rippen 45 verstärkt, die, bezogen auf die durch die Öffnung der Halbkugelform definierte Äquatorialebene, entlang regelmäßig verteilter Längenkreise in Richtung auf die Kugelmitte 47 hin verlaufen. Ein weiterer Unterschied zum ersten Ausführungsbeispiel besteht darin, dass zwischen Führungsring 19 und Ringnut 27 die äußere Kolbenwand 33 weggelassen ist und der radial außenliegende Endrand 39 der Verstärkungsrippen 35 vom Außenumfang des Trennkolbens 3 radial nach innen versetzt ist.

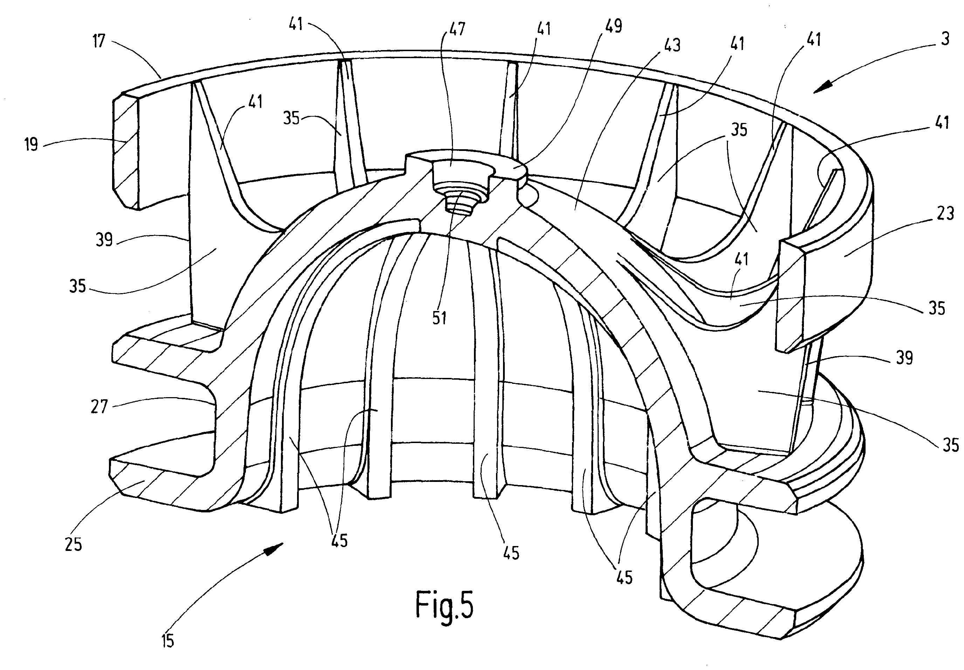

Das in Fig. 5 gezeigte, dritte Ausführungsbeispiel entspricht dem Ausführungsbeispiel von Fig. 4, abgesehen davon, dass die Kugelmitte 47 des Gewölbes 43 axial bis zur Ebene des oberen Endbereichs 17 angehoben ist. An der Kugelmitte 47 ist eine ebene Außenfläche 49 ausgebildet, so dass eine größere Kontaktfläche für die Anlage an einem Deckelteil 9 gebildet ist, wodurch sich bessere Festigkeitseigenschaften bei einem auf der Ölseite 5 herrschenden Überdruck ergeben. Eine an der Außenfläche 49 gebildete Bohrung 51 kann als Anschlusseinrichtung für ein gegebenenfalls vorzusehendes Koppelelement, wie eine Kolbenstange, dienen.

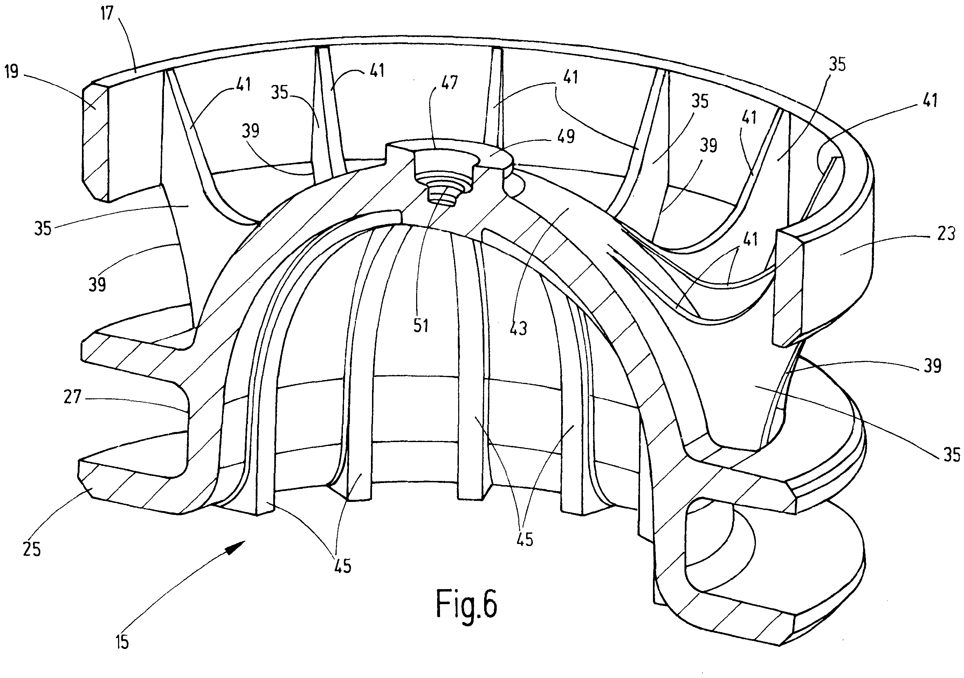

Die Fig. 6 zeigt ein viertes Ausführungsbeispiel, das sich gegenüber Fig. 5 lediglich insofern unterscheidet, als der Außenrand 39 der Verstärkungsrippen 35 zwischen Führungsring 19 und der Außenseite des Gewölbes 43 nicht geradlinig, sondern radial nach innen geschwungen verläuft.

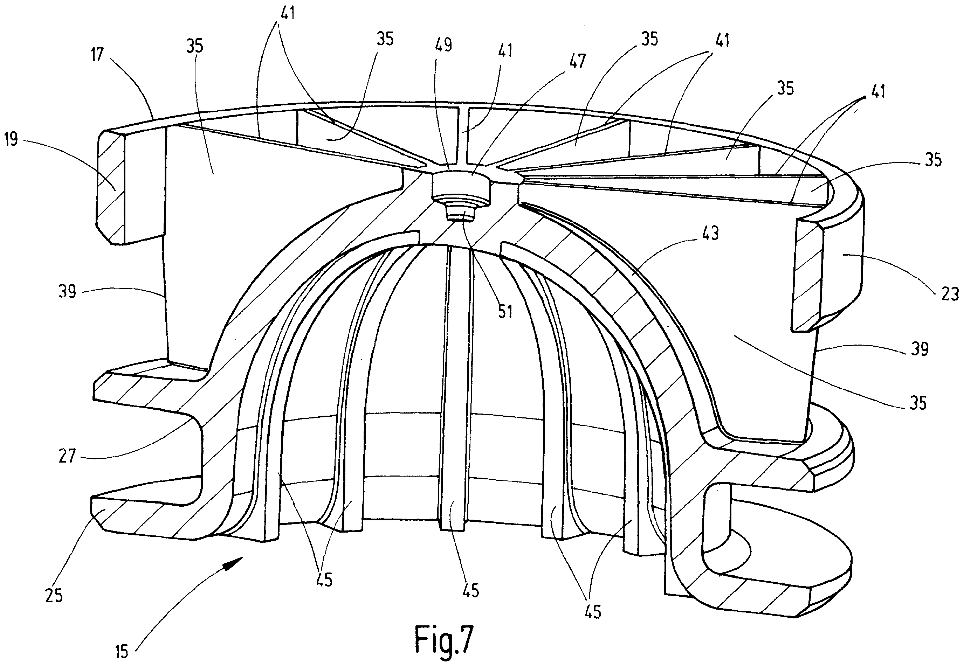

Das fünfte Ausführungsbeispiel von Fig. 7 entspricht dem Ausführungsbeispiel von Fig. 5, abgesehen davon, dass der obere Endrand 41 der Verstärkungsrippen 35 in einer Ebene mit dem oberen Endbereich 17 des Kolbens 3 und der Außenfläche 49 der Kugelmitte 47 des Gewölbes 43 verläuft. Zusammen mit dieser Außenfläche 49 vergrößern die Endränder 41 der Verstärkungsrippen 35 die Kontaktfläche für eine Anlage an einem Gehäusedeckel, wodurch sich besonders günstige Festigkeitseigenschaften ergeben.

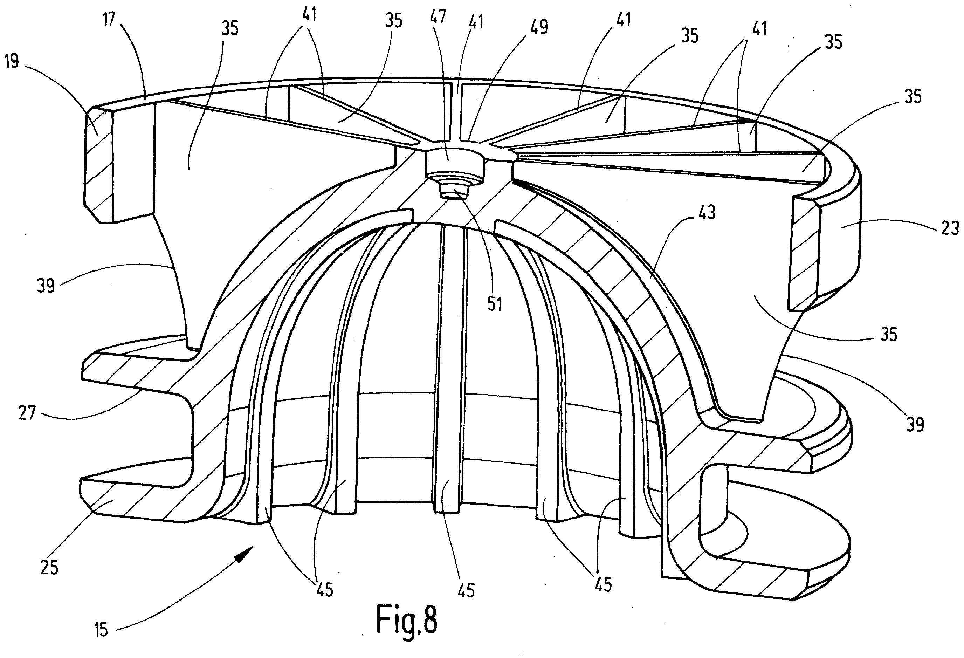

Das sechste Ausführungsbeispiel von Fig. 8 entspricht dem Ausführungsbeispiel von Fig. 7, abgesehen davon, dass, wie dies auch bei dem Beispiel von Fig. 6 der Fall ist, der radial außenliegende Endrand 39 der Verstärkungsrippen 35 zwischen Führungsring 19 und der Ringnut 27 radial nach innen geschwungen verläuft.

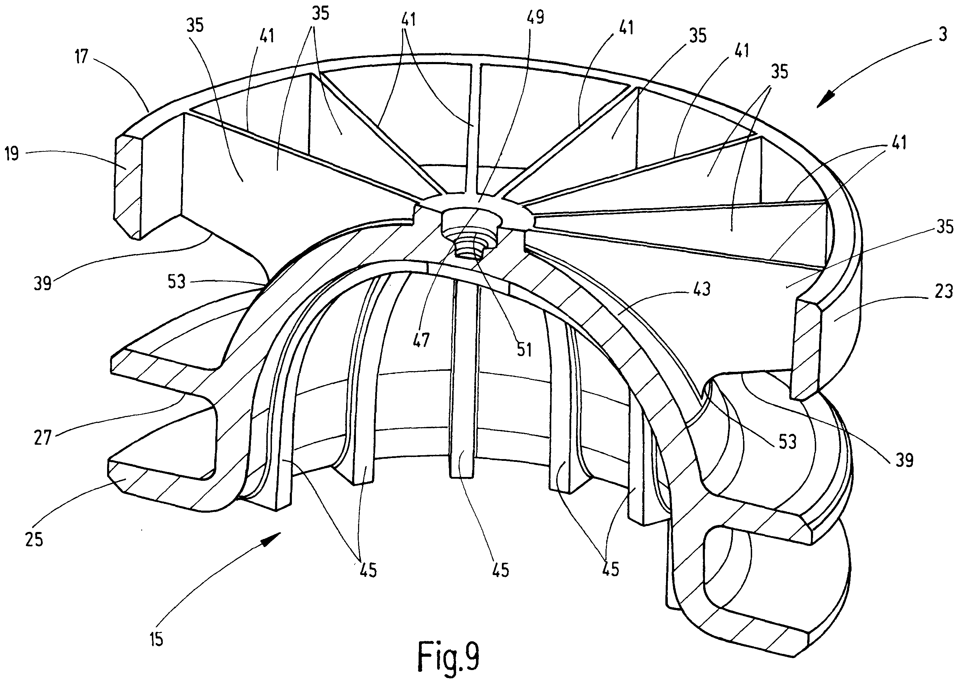

Das siebte Ausführungsbeispiel von Fig. 9 unterscheidet sich vom Beispiel von Fig. 8 dadurch, dass sich die radial äußeren Endränder 39 der Verstärkungsrippen 35, ausgehend vom Führungsring 19 nicht in axialer Richtung bis zur Ringnut 27 erstrecken, sondern an der Außenseite des Gewölbes 43 in einem von der Ringnut 27 axial versetzten Bereich 53 angrenzen. Dank der hohen Strukturfestigkeit des kugeligen Gewölbes 43 ergeben sich auch trotz der weiteren Einsparung an Kolbenmaterial und dadurch weiter verringertem Kolbengewicht günstige Festigkeitseigenschaften des Trennkolbens 3.

Die erfindungsgemäße Bauweise des Trennkolbens 3 ermöglicht es, den Trennkolben 3 mit hoher Festigkeit und sehr geringem Kolbengewicht aus einem Kunststoffwerkstoff einstückig, beispielsweise durch Spritzformen, auszubilden. Beispielsweise kann Polyarylamid als Werkstoff vorgesehen sein, der im Wesentlichen den gleichen Wärmeausdehnungskoeffizienten wie Stahlmaterial aufweist, wie es bei vielen Anwendungsgebieten als Material des Arbeitsgehäuses in Frage kommt, beispielsweise als Speichergehäuse 1. Kolben-Zylinder-Anordnungen mit der erfindungsgemäßen Trennvorrichtung lassen sich daher über große Arbeits- oder Temperaturbereiche sicher betreiben, etwa über Bereiche von -40 °C bis 120 °C oder höher. Auch kann eine Verstärkung des Kunststoffmaterials vorgesehen sein, etwa als Glasfaserverstärkung und/oder aus Kunststofffasern oder einem Kunststoffgelege, aufgebracht in der Art eines Laminates.

## Patentansprüche

1. Trennvorrichtung für Fluidmedien, die in einem Arbeitsgehäuse (1) aufnehmbar sind, mit einem Trennkolben (3), der innerhalb des Arbeitsgehäuses (1) zwei Medienräume (5, 7) voneinander mediendicht separieren kann und der entlang seines Außenumfangs zumindest teilweise mit einer Führungseinrichtung (19) versehen ist, die bei einer Verfahrbewegung des Trennkolbens (3) innerhalb des Arbeitsgehäuses (1) an dessen Innenwandung (21) gleitend anliegen kann, wobei die Führungseinrichtung (19) einstückiger Bestandteil des Trennkolbens (3) ist, wobei die Führungseinrichtung einen Führungsring (19) aufweist, der an dem Trennkolben (3) unmittelbar angeformt ist, und wobei der Trennkolben (3) einen die Trennwand zwischen den Räumen (5, 7) des Arbeitsgehäuses (1) bildenden Boden (15) aufweist, der eine ein Teil einer Kugelfläche bildende Wölbung (31) ins Kolbeninnere aufweist, **dadurch gekennzeichnet, dass** Verstärkungsrippen (35) in Form von in gleichen Abständen voneinander angeordneten, sich in Radialrichtung erstreckenden Platten die Verbindung zwischen dem Führungsring (19) des Trennkolbens (3) und dessen Boden (15) bilden und dass an einer den Verstärkungsrippen (35) gegenüberliegenden Innenseite der Wölbung (31) diese durch aus einer Innenwand vorstehende Rippen (45) verstärkt ist.

2. Trennvorrichtung nach Anspruch 1, **dadurch gekennzeichnet, dass** der Führungsring (19) an einem Endbereich (17) des Trennkolbens (3) angeformt ist.

3. Trennvorrichtung nach Anspruch 2, **dadurch gekennzeichnet, dass** an dem dem Führungsring (19) entgegengesetzten Endbereich (25) des Trennkolbens (3) eine umfängliche Ringnut (27) als Sitz für eine Kolbendichtung, beispielsweise in Form eines O-Ringes (29), gebildet ist.

4. Trennvorrichtung nach einem der vorstehenden Ansprüche, **dadurch gekennzeichnet, dass** der Führungsring (19) für die Zusammenwirkung mit einer kreiszylindrischen Innenwandung (21) des Arbeitsgehäuses (1) eine einen Teil eines Zylindermantels bildende Führungsfläche (23) ausbildet.

5. Trennvorrichtung nach einem der Ansprüche 3 bis 4, **dadurch gekennzeichnet, dass** der Boden (15) des Trennkolbens (3) ein halbkugelartiges, zu einer Kolbenseite offenes Gewölbe (43) bildet, an dessen Innenseite die Rippen (45) vorgesehen sind, die, bezogen auf die durch die Öffnung der Halbkugelform definierte Äquatorialebene, entlang von Längenkreisen zur Kugelmitte (47) des Gewölbes (43) verlaufen.

6. Trennvorrichtung nach Anspruch 5, **dadurch gekennzeichnet, dass** sich das Gewölbe (43) des Bodens (15) mit einer im Bereich der Kugelmitte (47) gebildeten Außenfläche (49) bis zur Höhe des benachbarten Endbereichs (17) des Trennkolbens (3) erstreckt.

7. Trennvorrichtung nach einem der Ansprüche 3 bis 6, **dadurch gekennzeichnet, dass** die Verstärkungsrippen (35) in dem zwischen dem Führungsring (19) und der Ringnut (27) gelegen Axialbereich des Trennkolbens (3) einen vom Außenumfang des Trennkolbens (3) radial nach innen versetzten Endrand (39) besitzen.

8. Trennvorrichtung nach Anspruch 7, **dadurch gekennzeichnet, dass** der zwischen Führungsring (19) und Ringnut (27) verlaufende äußere Endrand (39) der Verstärkungsrippen (35), von dem Führungsring (19) ausgehend, mit einer Biegung radial nach innen verläuft.

9. Trennvorrichtung nach einem der Ansprüche 6 bis 8, **dadurch gekennzeichnet, dass** ein oberer Rand (41) der Verstärkungsrippen (35) mit der oberen Außenfläche (49) des Kugelgewölbes (43) und mit dem das Kolbenende definierenden Endrand des Führungsringes (19) in einer gemeinsamen Ebene liegt.

10. Trennvorrichtung nach einem der Ansprüche 3 bis 9, **dadurch gekennzeichnet, dass** der der Ringnut (27) zugewandte Endrand (39) der Verstärkungsrippen an die Außenseite des Kugelgewölbes (43) an einer Stelle (53) angrenzt, die gegenüber der zugekehrten Wand der Ringnut (27) axial versetzt ist.

11. Kolben-Zylinder-Anordnung, die eine Trennvorrichtung gemäß einem der Ansprüche 1 bis 10 besitzt, deren Trennkolben (3) in einem Arbeitsgehäuse (1) in Form eines Zylinders verfahrbar ist, in dem der Trennkolben (3) zwei Arbeitsräume (5, 7) mediendicht voneinander separiert.

12. Kolben-Zylinder-Anordnung nach Anspruch 11, **dadurch gekennzeichnet, dass** sie als Kolbenspeicher ausgebildet ist, in dem der Trennkolben (3) eine Gasseite (7) von einer Ölseite (5) separiert.

## Claims

1. Separation device for fluid media that can be received in a work housing (1), comprising a separator piston (3) which can separate two media chambers (5, 7) in a media-tight manner from one another inside the work housing (1) and which is furnished at least partially along its outer circumference with a guide apparatus (19), which, when the separator piston (3) performs a displacement motion inside the work housing (1), is able to lie in sliding contact with the inner walls (21) thereof, wherein the guide apparatus (19) forms an integral part of the separator piston (3), wherein the guide apparatus comprises a guide ring (19), which is formed directly on the separator piston (3), and wherein the separator piston (3) comprises a base (15) forming the partition wall between the chambers (5, 7) of the work housing (1), said base comprising a dome (31) forming part of a spherical surface inside the piston, **characterised in that** reinforcing ribs (35) in the form of plates extending in the radial direction arranged at equal distances from one another form the connection between the guide ring (19) of the separator piston (3) and the base (15) thereof and **in that**, on an inner side of the dome (31) opposite the reinforcing ribs (35), said dome is reinforced by ribs (45) protruding from an inner wall.

2. Separation device according to claim 1, **characterised in that** the guide ring (19) is formed on an end region (17) of the separator piston (3).

3. Separation device according to claim 2, **characterised in that** a circumferential annular groove (27) is formed, as a seat for a piston seal, for example in the form of an O-ring, on the end region (25) of the separator piston (3) opposite the guide ring (19).

4. Separation device according to any one of the preceding claims, **characterised in that** the guide ring (19) forms a guide surface (23) forming part of a cylinder jacket for interaction with a circular-cylindrical inner wall (21) of the work housing (1).

5. Separation device according to any one of claims 3 to 4, **characterised in that** the base (15) of the separator piston (3) forms a hemispherical dome (43), open on one piston side, on the inside of which the ribs (45) are provided, said ribs running along longitudinal circles to the centre (47) of the sphere of the dome (43) in relation to the equatorial plane defined by the opening of the hemispherical form.

6. Separation device according to claim 5, **characterised in that** the dome (43) of the base (15) extends up to the height of the adjacent end region (17) of the separator piston (3) with an outer surface (49) formed in the region of the centre (47) of the sphere.

7. Separation device according to any one of claims 3 to 6, **characterised in that** the reinforcing ribs (35) in the axial region of the separator piston (3) located between the guide ring (19) and the annular groove (27) have an end edge (39) which is offset radially inwards from the outer circumference of the separator piston (3).

8. Separation device according to claim 7, **characterised in that** the outer end edge (39) of the reinforcing ribs (35) running between the guide ring (19) and the annular groove (27) runs from the guide ring (19) radially inwards with a curve.

9. Separation device according to any one of claims 6 to 8, **characterised in that** an upper edge (41) of the reinforcing ribs (35) lies in a common plane with the upper outer surface (49) of the spherical dome (43) and with the end edge of the guide ring (19) defining the piston end.

10. Separation device according to any one of claims 3 to 9, **characterised in that** the end edge (39) of the reinforcing ribs facing the annular groove (27) is adjacent to the outside of the spherical dome (43) at a point (53) which is axially offset in relation to the facing wall of the annular groove (27).

11. Piston-cylinder arrangement which comprises a separation device according to any one of claims 1 to 10, having a separator piston (3) that can be moved in a work housing (1) in the form of a cylinder, the separator piston (3) separating two work chambers (5, 7) from one another in a media-tight manner in said work housing.

12. Piston-cylinder arrangement according to claim 11, **characterised in that** it is designed as an accumulator piston, in in which the separator piston (3) separates a gas side (7) from an oil side (5).

## Revendications

1. Système de séparation de milieux fluides, qui sont reçus dans une enveloppe (1) de travail, comprenant un piston (3) de séparation, qui peut séparer à l'intérieur de l'enveloppe (1) de travail deux espaces (5, 7) de milieux l'un de l'autre d'une manière étanche aux milieux et qui est pourvu le long de son pourtour extérieur au moins en partie d'un dispositif (19) de guidage, qui, lors d'un mouvement de déplacement du piston (3) de séparation dans l'enveloppe (1) de travail, peut s'y appliquer en glissant à la paroi (21) intérieure, dans lequel le dispositif (19) de guidage est une partie constitutive d'une seule pièce du piston (3) de séparation, dans lequel le dispositif de guidage a un anneau (19) de guidage, qui est formé directement sur le piston (3) de séparation, et dans lequel le piston (3) de séparation a un fond (15), qui forme la cloison entre les espaces (5, 7) de l'enveloppe (1) de travail et qui a à l'intérieur du piston une voûssure (31) formant une partie d'une surface sphérique, **caractérisé en ce que** des nervures (35) de renfort, sous la forme de plaques équidistantes les unes des autres et s'étendant dans la direction radiale, forment la liaison entre l'anneau (19) de guidage du piston (3) de séparation et son fond (15) et **en ce que**, sur une face intérieure, opposée aux nervures (35) de renfort, de la voûssure (31), celle-ci est renforcée par des nervures (45) en saillie d'une paroi intérieure.

2. Système de séparation suivant la revendication 1, **caractérisé en ce que** l'anneau (19) de guidage est formé à une partie (17) d'extrémité du piston (3) de séparation.

3. Système de séparation suivant la revendication 2, **caractérisé en ce que**, sur la partie (25) d'extrémité, opposée à l'anneau (19) de guidage, du piston (3) de séparation, est formée une rainure (27) annulaire faisant le tour comme siège d'une étanchéité de piston, par exemple sous la forme d'un joint (29) torique.

4. Système de séparation suivant l'une des revendications précédentes, **caractérisé en ce que** l'anneau (19) de guidage constitue, pour la coopération avec une paroi (21) intérieure cylindrique de section droite circulaire de l'enveloppe (1) de travail, une surface (23) de guidage formant une partie d'une enveloppe cylindrique.

5. Système de séparation suivant l'une des revendications 3 à 4, **caractérisé en ce que** le fond (15) du piston (3) de séparation forme une voûte (43) de type hémisphérique, ouverte vers un côté de piston et sur la face intérieure de laquelle sont prévues les nervures (45) qui, rapporté au plan équatorial défini par l'ouverture de la forme hémisphérique, s'étendent le long de cercles longitudinaux vers le milieu (47) de la sphère de la voûssure (43).

6. Système de séparation suivant la revendication 5, **caractérisé en ce que** la voussure (43) du fond (15) s'étend par une surface (49) extérieure, formée dans la partie du milieu (47) de la sphère, jusqu'au niveau de la partie (17) d'extrémité voisine du piston (3) de séparation.

7. Système de séparation suivant l'une des revendications 3 à 6, **caractérisé en ce que** les nervures (35) de renfort ont dans la partie axiale, entre l'anneau (19) de guidage et la rainure (27) annulaire, du piston (3) de séparation, un bord (39) d'extrémité décalé vers l'intérieur radialement du pourtour extérieur du piston (3) de séparation.

8. Système de séparation suivant la revendication 7, **caractérisé en ce que** le bord (39) d'extrémité extérieur, s'étendant entre l'anneau (19) de guidage et la rainure (27) annulaire, des nervures (35) de renfort, s'étend en partant de l'anneau (19) de guidage vers l'intérieur radialement en ayant une courbure.

9. Système de séparation suivant l'une des revendications 6 à 8, **caractérisé en ce qu'**un bord (41) supérieur des nervures (35) de renfort se trouve dans un plan commun avec la surface (49) extérieure supérieure de la voûssure (43) sphérique et avec le bord d'extrémité, définissant l'extrémité du piston, de l'anneau (19) de guidage.

10. Système de séparation suivant l'une des revendications 3 à 9, **caractérisé en ce que** le bord (39) d'extrémité, tourné vers la rainure (27) annulaire, des nervures de renfort est voisin du côté extérieur de la voûssure (43) sphérique en un point, qui est décalé axialement par rapport à la paroi de la rainure (27) annulaire qui y est tournée.

11. Agencement piston-cylindre, qui a un système de séparation suivant l'une des revendications 1 à 10, dont le piston de séparation peut se déplacer dans une enveloppe (1) de travail sous la forme d'un cylindre, dans lequel le piston (3) de séparation sépare l'un de l'autre deux espaces (5, 7) de travail d'une manière étanche aux fluides.

12. Agencement piston-cylindre suivant la revendication 11, **caractérisé en ce qu'**il est constitué en accumulateur à piston dans lequel le piston (3) sépare un côté (7) pour du gaz d'un côté (5) pour de l'huile.
